# FASCICULE DE BREVET EUROPEEN

(11) **EP 1 781 938 B1**
(45) Date de publication et mention de la délivrance du brevet: **08.07.2009**
(21) Numéro de dépôt: 05797583.1
(22) Date de dépôt: 09.08.2005
(51) Int. Cl.: F02N 11/08

(54) **PROCEDE DE LIMITATION DU NOMBRE D'ARRETS ET DE REDEMARRAGES AUTOMATIQUES D'UN MOTEUR THERMIQUE DE VEHICULE**
VERFAHREN ZUR BEGRENZUNG DER ANZAHL MALE, DIE EIN FAHRZEUGWÄRMEKRAFTMOTOR AUTOMATISCH STOPPEN UND STARTEN KANN
METHOD OF LIMITING THE NUMBER OF TIMES A VEHICLE HEAT ENGINE CAN AUTOMATICALLY STOP AND START

(30) Priorité: 27.08.2004 FR 0451914
(43) Date de publication de la demande: 09.05.2007
(73) Titulaire: PEUGEOT CITROËN AUTOMOBILES S.A., 78140 Vélizy Villacoublay (FR)
(72) Inventeur: CELISSE, Arnaud, F-75017 PARIS (FR); GUY, Jean-Emmanuel, F-78150 LE CHESNAY (FR); KLEIN, Hervé, F-92300 LEVALLOIS PERRET (FR); LEVASSEUR, Guillaume, F-92000 NANTERRE (FR)
(74) Mandataire: Ménès, Catherine
(86) Numéro de dépôt international: PCT/FR2005/050664
(87) Numéro de publication internationale: WO 2006/027513

(56) Documents cités:
- EP-A- 0 990 793
- EP-A- 1 231 092
- US-A1- 2003 106 515

## Description

La présente invention concerne un procédé de commande de l'arrêt et du démarrage automatique d'un moteur thermique équipant un véhicule du type automobile ou routier.

La présente invention concerne plus particulièrement un procédé de limitation du nombre d'arrêts et de démarrages pour une phase donnée de demande d'arrêt moteur.

Les constructeurs de véhicules équipés de moteurs thermiques, tels que les véhicules automobiles ou routiers, cherchent en permanence des solutions techniques susceptibles de réduire la consommation et les émissions de polluants de ces moteurs.

Parmi les différentes solutions développées à ce jour, il a été proposé un système provoquant l'arrêt automatique du moteur dans toutes les phases d'utilisation du véhicule où le fonctionnement du moteur n'est pas nécessaire, telles que les phases où le véhicule est momentanément à l'arrêt et où le moteur continue malgré tout de fonctionner au ralenti, puis opérant le démarrage automatique du moteur lorsque le conducteur souhaite faire repartir son véhicule.

Cette solution d'arrêt et de démarrage automatique des moteurs, encore appelée par les Anglo-saxons "Stop and Start" ou "Stop and Go", a un potentiel important de réduction de la consommation des moteurs car on estime qu'en moyenne, pour un trajet donné, un véhicule est à l'arrêt, moteur tournant au ralenti pendant environ 20% du temps.

Un système "Stop and Start" comprend généralement un calculateur pour commander automatiquement l'arrêt et le démarrage du moteur thermique à partir d'informations appropriées sur le fonctionnement du véhicule. Ce calculateur comporte notamment des moyens aptes à identifier une phase de demande d'arrêt moteur, des moyens aptes à identifier une phase d'autorisation d'arrêt moteur pendant laquelle l'arrêt du moteur est effectivement possible et des moyens pour opérer l'arrêt effectif du moteur si les conditions "véhicule en phase de demande d'arrêt moteur" et "véhicule en phase d'autorisation d'arrêt moteur" sont réunies.

De la même manière un système "Stop and Start" comporte notamment des moyens aptes à identifier une phase de demande de démarrage moteur, des moyens aptes à identifier une phase d'autorisation de démarrage moteur pendant laquelle le démarrage du moteur est effectivement possible et des moyens pour opérer le démarrage effectif du moteur si les conditions "véhicule en phase de demande de démarrage moteur" et "véhicule en phase d'autorisation de démarrage moteur" sont réunies.

On appelle "phase de demande d'arrêt moteur" toute période temporelle pendant laquelle le conducteur marque sa volonté d'arrêter le moteur de son véhicule, le véhicule pouvant être arrêté ou encore roulant. Une telle volonté d'arrêt du moteur peut être caractérisée par différents critères, comme l'actionnement par le conducteur de la pédale de frein du véhicule.

On appelle "phase d'autorisation d'arrêt moteur" toute période pendant laquelle le fonctionnement du véhicule ne requière pas le fonctionnement du moteur et autorise donc son arrêt. Les conditions de fonctionnement du véhicule requérant le fonctionnement du moteur et ce, alors que le véhicule se trouve en phase de demande d'arrêt moteur, peuvent aussi bien concerner le fonctionnement même d'un équipement du véhicule que relever du seul agrément de conduite. Ces conditions s'opposant à l'arrêt du moteur sont caractérisées par des critères variés telle que par exemple la température de l'eau de refroidissement moteur inférieure à une valeur de seuil prédéterminée. En effet, un moteur doit atteindre une certaine température pour fonctionner de façon optimale, il n'est donc pas opportun de retarder la montée en température du moteur en l'arrêtant trop tôt après son démarrage.

On appelle "phase de demande de démarrage moteur" toute période temporelle pendant laquelle le fonctionnement du véhicule requière le démarrage du moteur. Les conditions de fonctionnement du véhicule requérant un tel démarrage se déduisent généralement des conditions s'opposant à l'arrêt du moteur.

On appelle "phase d'autorisation de démarrage moteur" toute période pendant laquelle le fonctionnement du véhicule n'interdit pas le démarrage du moteur. Les conditions de fonctionnement s'opposant à un démarrage peuvent être liées par exemple à l'état ouvert ou fermé de l'embrayage et/ou à l'état de la transmission, vitesse engagée ou non.

Le document WO-98/14702 décrit un système "Stop and Start". Ce système comprend une carte électronique qui commande l'arrêt ou le démarrage du moteur thermique à partir des informations fournies par deux capteurs :
- un capteur de position de la pédale d'embrayage ;
- un capteur de position du frein à main.

Si la pédale d'embrayage n'est pas enfoncée et si le frein à main est actionné, alors le moteur est arrêté automatiquement. Si la pédale d'embrayage est enfoncée et si le frein à main est relâché, alors le moteur est remis en route automatiquement.

Ce système utilise aussi un capteur de régime du moteur qui désactive la carte électronique si le régime du moteur est au-dessus d'un certain seuil et un capteur de température du moteur qui désactive également la carte électronique si le moteur- n'a pas atteint sa température de fonctionnement.

Un tel système permet bien de réduire la consommation du moteur thermique en minimisant les phases de fonctionnement au ralenti du moteur. Toutefois, la réduction de consommation générée par un tel système ne semble pas particulièrement optimisée.

En effet, les phases de demande d'arrêt du moteur sont ici simplement limitées aux périodes d'actionnement du frein de parking. Quant aux phases d'autorisation de l'arrêt moteur, elles ne sont définies qu'à partir d'un nombre très limité de conditions de fonctionnement du véhicule s'opposant à l'arrêt du moteur, à savoir les fonctionnements "moteur froid" ou encore les fonctionnements à vitesse de rotation élevée.

Avec un tel système, tout arrêt du véhicule pour lequel il n'est pas procédé à l'actionnement du frein de parking n'entraîne donc aucun arrêt du moteur, or ce type d'arrêt représente une proportion importante des phases d'arrêt véhicule. En effet, les conducteurs tirent rarement le frein à main en situation d'arrêt temporaire, comme lors d'arrêts à des feux tricolores de signalisation.

Par ailleurs, la solution décrite dans le document WO98/14702 est purement matérielle. Par conséquent, sa complexité et notamment celle de la carte électronique croît rapidement lorsque augmente le nombre d'informations prises en compte pour opérer l'arrêt automatique du moteur.

La demande de brevet FR-A-2 816 891 déposée par la Demanderesse décrit un système "Stop and Start" plus perfectionné remédiant aux inconvénients des systèmes antérieurs en créant un système permettant de mettre en oeuvre des stratégies d'arrêt et de démarrage automatique du moteur sensiblement plus performantes.

Le système de commande de l'arrêt et du démarrage automatique d'un moteur thermique de véhicule objet de la demande FR-A-816891 comprend des moyens d'arrêt et de démarrage du moteur, des capteurs d'informations sur l'état du véhicule, des moyens de commande desdits moyens d'arrêt et de démarrage du moteur à partir des informations des capteurs et est caractérisé en ce que ces moyens de commande comportent un calculateur contenant un algorithme de commande dudit moteur agissant en fonction des données délivrées par lesdits capteurs d'informations.

Ce système permet donc de prendre en compte un plus grand nombre de situations de fonctionnement véhicule demandant l'arrêt du moteur et donc d'améliorer le gain en consommation généré par un plus grand nombre d'arrêts du moteur, tout en prenant en compte un plus grand nombre de conditions de fonctionnement du véhicule s'opposant à l'arrêt du moteur et ce, de façon notamment à limiter les éventuels impacts d'un arrêt du moteur sur le fonctionnement du véhicule et sur son agrément de conduite.

Un tel système permet ainsi de résoudre simplement des problèmes qui font appel à des stratégies de contrôle du moteur plus complexes prenant en compte un nombre important de conditions de fonctionnement du véhicule.

Il est toutefois apparu que de nouveaux progrès étaient encore nécessaires pour offrir un agrément de conduite optimal.

En effet, dans tous les systèmes proposés à ce jour, lors d'une même phase de demande d'arrêt du moteur il est possible, selon les situations de fonctionnement du véhicule rencontrées (équipements mis en oeuvre successivement), d'observer plusieurs arrêts et redémarrages successifs du moteur. Or une telle situation où lors d'une même phase de demande d'arrêt du moteur, le moteur se trouve arrêté et redémarré plusieurs fois peut surprendre le conducteur et lui donner le sentiment que le système ne fonctionne pas correctement. Le conducteur doit en effet ne pas être perturbé par la logique de l'arrêt ou de redémarrage du moteur qui a été automatiquement commandé par le système "Stop and Start".

La présente invention vise donc à améliorer encore le procédé de commande de l'arrêt et du démarrage automatique d'un moteur en proposant un procédé de commande automatique de l'arrêt et du redémarrage d'un moteur qui contrôle le nombre d'arrêts du moteur dans une même phase de demande d'arrêt du moteur.

Le procédé selon l'invention concerne la commande de l'arrêt et du démarrage d'un moteur thermique équipant un véhicule du type selon laquelle il est nécessaire que le véhicule se trouve en phase de demande d'arrêt moteur et ne se trouve pas dans les conditions de fonctionnement prédéfinies s'opposant à l'arrêt du moteur pour que l'arrêt du moteur soit commandé ou qu'il est nécessaire que le véhicule se trouve en phase de demande de démarrage moteur et ne se trouve pas dans les conditions de fonctionnement prédéfinies s'opposant au démarrage du moteur pour que le démarrage du moteur soit commandé

Selon l'invention, le procédé de commande de l'arrêt et du démarrage d'un moteur thermique est caractérisé en ce que pour une phase de demande d'arrêt donnée du moteur, il n'est commandé, au plus, qu'un nombre prédéterminé d'arrêts ou de démarrages dudit moteur.

Selon une autre caractéristique du procédé de commande objet de la présente invention, pour une phase de demande d'arrêt donnée du moteur, il n'est commandé, au plus, qu'un seul arrêt du moteur.

Selon une autre caractéristique du procédé de commande objet de la présente invention, si, lors de la survenue d'une phase de demande d'arrêt du moteur, le véhicule se trouve dans certaines des conditions de fonctionnement prédéfinies s'opposant à l'arrêt du moteur, il n'est pas commandé d'arrêt du moteur pendant toute la durée de la phase de demande d'arrêt du moteur.

Selon une autre caractéristique du procédé de commande objet de la présente invention, si, lors de la survenue d'une phase de demande d'arrêt du moteur et pendant un laps de temps supérieur à une valeur de seuil suivant le début de la phase de demande d'arrêt du moteur, le véhicule se trouve dans certaines des conditions de fonctionnement prédéfinies s'opposant à l'arrêt du moteur, il n'est pas commandé d'arrêt du moteur pendant toute la durée de la phase de demande d'arrêt du moteur.

Selon une autre caractéristique du procédé de commande objet de la présente invention, si, lors de la survenue d'une phase de demande d'arrêt du moteur, le véhicule se trouve dans une quelconque des conditions de fonctionnement prédéfinies s'opposant à l'arrêt du moteur, il n'est pas commandé d'arrêt du moteur pendant toute la durée de la phase de demande d'arrêt du moteur.

Selon une autre caractéristique du procédé de commande objet de la présente invention, si, lors de la survenue d'une phase de demande d'arrêt du moteur et pendant un laps de temps supérieur à une valeur de seuil suivant le début de ladite phase de demande d'arrêt du moteur, le véhicule se trouve dans une quelconque des conditions de fonctionnement prédéfinies s'opposant à l'arrêt du moteur, il n'est pas commandé d'arrêt du moteur pendant toute la durée de la phase de demande d'arrêt du moteur.

Selon une autre caractéristique du procédé de commande objet de la présente invention, si, pendant une phase de demande d'arrêt du moteur et alors que le moteur a été arrêté, le véhicule se trouve dans certaines des conditions de fonctionnement prédéfinies s'opposant à l'arrêt du moteur, il est alors commandé le démarrage du moteur et il ne sera plus commandé d'arrêt dudit moteur pendant tout le reste de ladite phase de demande d'arrêt du moteur.

Selon une autre caractéristique du procédé de commande objet de la présente invention, si, pendant une phase de demande d'arrêt du moteur et alors que le moteur a été arrêté, le véhicule se trouve dans une quelconque des conditions de fonctionnement prédéfinies s'opposant à l'arrêt du moteur, il est alors commandé le démarrage du moteur et il ne sera plus commandé d'arrêt dudit moteur pendant tout le reste de la phase de demande d'arrêt du moteur.

L'invention sera mieux comprise à la lecture de la description qui va suivre, donnée uniquement à titre d'exemple et faite en se référant aux dessins annexés sur lesquels :
- la figure 1 représente une architecture matérielle de l'ensemble du système de mise en oeuvre du procédé selon l'invention ;
- la figure 2 représente un organigramme schématique du procédé selon l'invention.

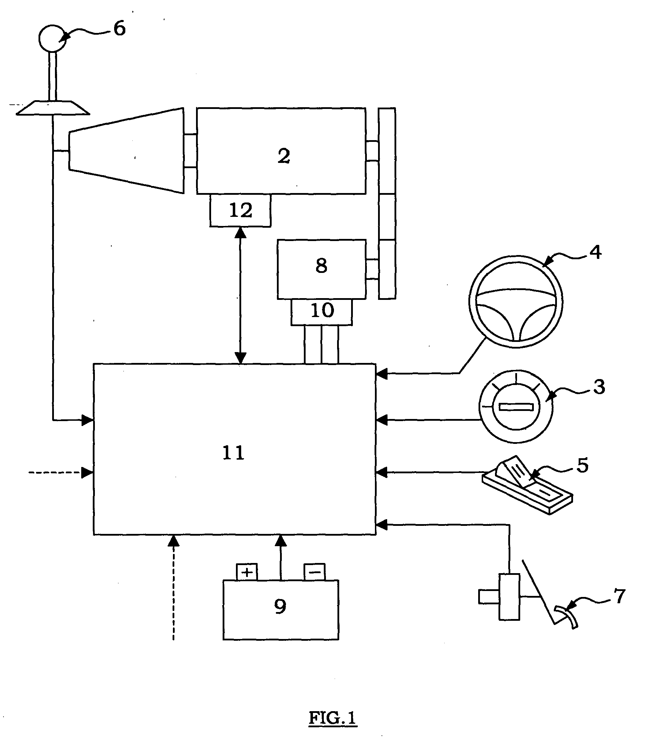

La figure 1 représente différents organes d'un véhicule automobile équipé d'un moteur thermique 2. Dans l'habitacle du véhicule, un commutateur 3 (avec ou sans clé) disposé à proximité du volant de direction 4 commande manuellement le démarrage ou l'arrêt du moteur 2 tandis qu'un moyen, tel qu'un commutateur à deux postions de type bouton poussoir 5, permet au conducteur d'activer ou d'inhiber le fonctionnement du véhicule en mode "Stop and Start", c'est-à-dire en mode d'arrêt et de démarrage automatique du moteur 2.

Le véhicule comporte par ailleurs un mécanisme de transmission dont le levier de changement de vitesses 6 est figuré ainsi qu'un dispositif de freinage commandé notamment par une pédale de frein 7.

Bien évidemment ces équipements ne sont pas limitatifs des autres équipements du véhicule qui n'ont pas été figurés tels que notamment un embrayage, un groupe moto-ventilateur pour refroidir le moteur 2, un dispositif de climatisation pour refroidir/chauffer l'habitacle ou encore un mécanisme de direction assistée, etc.

Le moteur thermique 2 est un moteur classique du type multi-cylindres à allumage commandé ou à allumage par compression (diesel). Ces types de moteur sont bien connus et ne seront donc pas détaillés plus avant. Le fonctionnement du moteur 2 est classiquement commandé par un calculateur de contrôle moteur 12 qui pilote notamment le débit de carburant.

Le moteur 2 coopère avec des moyens de démarrage appropriés telle qu'une machine électrique tournante réversible 8 formant alternato-démarreur. Une transmission de mouvement, par exemple par poulies et courroie, relie le rotor de l'alterno-démarreur 8 au vilebrequin du moteur 2.

Dans une variante de réalisation, le moteur 2 peut également coopérer avec un démarreur additionnel non figuré distinct de l'alterno-démarreur 8.

La machine 8 permet de transformer un mouvement -de -rotation du rotor inducteur, entraîné par le moteur thermique 2 du véhicule, en un courant électrique induit dans les bobinages du stator. Ce courant est alors destiné à alimenter en électricité le réseau de bord du véhicule et à charger la batterie 9 de ce véhicule.

La machine 8 peut également constituer un moteur électrique ou machine électrique tournante et entraîner en rotation, via l'arbre de rotor, le moteur thermique 2 du véhicule. Ainsi, l'alterno-démarreur 8 peut démarrer le moteur thermique 2 du véhicule automobile.

Cette machine 8 par exemple de type polyphasé fonctionne donc en alternateur pour, notamment, charger la batterie du véhicule et en démarreur pour entraîner le moteur à combustion interne, dit aussi moteur thermique, du véhicule automobile pour son démarrage. A cet effet, une unité de puissance connectée sur les phases de l'induit de l'alternateur sert de pont de commande de ces phases en mode moteur et fait office de pont redresseur lorsque l'alterno-démarreur 8 fonctionne en mode alternateur.

Une telle machine 8 est bien connue en elle-même et ne sera pas détaillée plus avant. Le document FR2842041 décrit par exemple une telle machine.

Le système mettant en oeuvre le procédé de commande automatique de l'arrêt et du démarrage du moteur selon l'invention comprend un calculateur 11 qui pilote via les calculateurs 10 et 12 le fonctionnement de la machine 8 et l'arrêt et le démarrage du moteur 2 et ce, à partir d'un certain nombre d'informations concernant le fonctionnement du véhicule.

Le calculateur 11 coopère en effet avec des capteurs d'information appropriés aptes à fournir en plus de la position du commutateur 3 ou du bouton 5, les informations requises sur le fonctionnement du véhicule telle que la vitesse de rotation du moteur 2, la vitesse du véhicule, la distance parcourue, la position de la pédale d'embrayage, la position de la pédale d'accélérateur, la position du levier de changement de vitesses 6, la position de la pédale de frein 7 et celle du levier de frein à main, le rapport de vitesse enclenchée dans la boîte de vitesses, la température d'eau de refroidissement du moteur, l'état de charge de la batterie 9, l'état de la climatisation, le couple exercé par le conducteur sur le volant, etc.

Il est important de remarquer que le calculateur 11 au sens de la présente invention est défini de façon plus générale comme étant tout système dans lequel peut être implanté un algorithme de commande à l'aide de moyens de programmation et contenant au moins une mémoire. Un réseau logique programmable du type ASIC pourrait être utilisé. Ce calculateur 11 peut être spécifique comme illustré ou bien encore être intégré à un autre calculateur comme, par exemple, les calculateurs 10 ou 12 ou bien encore intégré dans plusieurs calculateurs.

Le calculateur 11 opère une surveillance constante du fonctionnement du véhicule à partir d'un certain nombre d'informations transmises directement par des capteurs appropriés ou par l'intermédiaire d'autres calculateurs auxquels le calculateur 11 est connecté et, le moteur étant tournant, il en vérifie si le véhicule se trouve ou non en phase de demande d'arrêt moteur et en phase d'autorisation d'arrêt moteur et en déduit l'arrêt du moteur. De la même façon, le moteur étant arrêté, le calculateur 11 vérifie à partir des informations reçues si le véhicule se trouve ou non en phase de demande de démarrage et en phase d'autorisation du démarrage moteur et en déduit le démarrage du moteur.

Les phases de demande d'arrêt moteur sont définies par des critères de fonctionnement véhicule appropriés combinant le fait que le bouton 5 se trouve en position "non inhibé" et que notamment l'un des critères suivants soit observé :
- la position de la pédale de frein passe de "non appuyée" à "appuyée";
- le levier de vitesses est au neutre.

Pour ce qui est des phases d'autorisation d'arrêt moteur, elles sont définies à partir d'un certain nombre de critères identifiant des conditions de fonctionnement véhicule prédéfinies s'opposant à l'arrêt du moteur 2.

On pourra distinguer différents types de condition de fonctionnement véhicule susceptibles de définir ces phases d'autorisation :
- des conditions liées au véhicule proprement dit tels que les besoins moteur (température d'eau, etc.), les besoins d'assistance freinage, les besoins du réseau électrique de bord, les besoins thermiques habitacles, etc.;
- des conditions liées à l'agrément de conduite tels que des manoeuvres de parking, etc.;
- des conditions liées au conducteur.

Pour ce qui est des phases de demande de démarrage, elles se déduisent sensiblement des conditions s'opposant à l'arrêt du moteur.

Quant aux conditions s'opposant aux demandes de démarrage, elles comprennent notamment des situations liées à la transmission telle que l'existence d'une vitesse enclenchée.

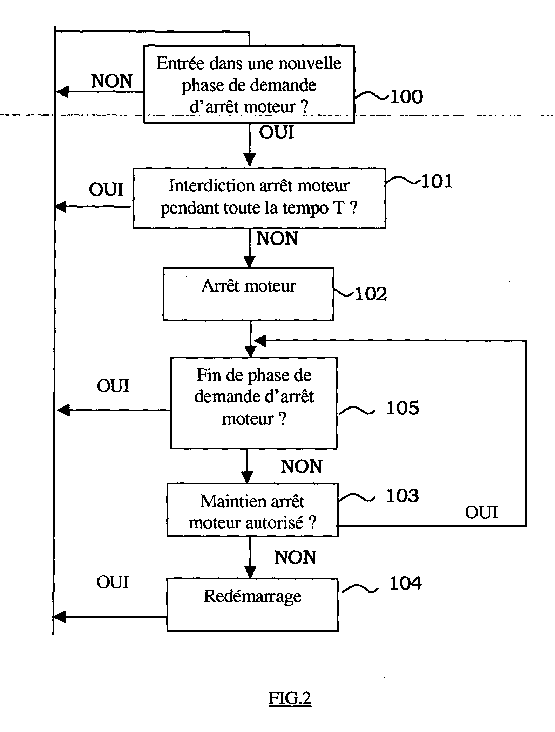

La figure 2 représente un exemple d'algorithme de commande mettant en oeuvre le procédé selon l'invention et contenu dans les mémoires électroniques du calculateur 11.

Il est à noter que l'architecture logicielle utilisée pour coder l'algorithme peut se décomposer en deux modules.

Un premier module appelé logiciel de bas niveau regroupe les commandes relatives à l'architecture matérielle utilisée telles que la lecture d'un signal sur l'une des entrées du microcontrôleur ou l'émission d'un signal de sortie. Ce logiciel de bas niveau est propre au microcontrôleur utilisé. Le second module appelé logiciel de haut niveau, est lui spécifique à l'application réalisée.

Dans la présente invention, le second module est utilisé pour implanter la stratégie de gestion des démarrages et des arrêts automatiques du moteur. Il est réalisé dans un langage de programmation tel que le langage C.

Une fois le moteur démarré et dans le cas où le commutateur 4 est dans la position dans laquelle la fonction d'arrêt automatique du moteur est activée, le calculateur 11 scrute régulièrement l'état de fonctionnement du moteur à partir des informations collectées et déroule donc de façon itérative les étapes ci-dessous.

Lors de l'étape de test 100, le calculateur 11 vérifie si véhicule est entré dans une nouvelle phase de demande d'arrêt moteur.

Une phase de demande d'arrêt est par exemple identifiée si le conducteur appuie sur la pédale de frein et/ou s'est mis au point mort (levier de vitesses en position neutre ou point mort) et que le bouton 5 est en position d'activation ou "non inhibé".

Lorsqu'une nouvelle phase de demande d'arrêt du moteur a été identifiée et pendant tout le temps que va durer cette phase de demande d'arrêt c'est-à-dire tout le temps que le conducteur garde son pied appuyé sur la pédale de frein et/ou demeure au point mort et que le bouton 5 est en position d'activation, le calculateur vérifie ensuite si le véhicule se trouve en phase d'autorisation d'arrêt moteur ou non et ce lors de l'étape 101.

L'arrêt effectif du moteur n'est, en effet, commandé que si les conditions de fonctionnement du véhicule le permettent c'est-à-dire si le véhicule ne se trouve pas dans l'une ou l'autres des conditions prédéterminées pour lesquelles l'arrêt du moteur n'est pas autorisé.

Les conditions n'autorisant pas l'arrêt du moteur sont donc une à une testées au cours de l'étape 101. L'étape 101 consiste donc en une série de tests distincts qui ne seront pas détaillés plus avant, susceptible de caractériser chacun un fonctionnement du véhicule pour lequel l'arrêt du moteur n'est pas autorisé.

Si au moins une des conditions de fonctionnement du moteur s'opposant à l'arrêt du moteur se trouve vérifiée alors le moteur n'est pas arrêté et le moteur ne sera pas arrêté pendant toute la durée de la phase présente de demande d'arrêt véhicule même si la condition n'autorisant pas initialement l'arrêt vient à disparaître avant la fin de cette phase de demande d'arrêt. Le processus s'arrête donc là et l'on revient à l'étape 100.

De la sorte le conducteur ne sera pas surpris par d'éventuels arrêts et redémarrages successifs durant une même phase de demande d'arrêt moteur.

En variante de réalisation, on pourra opérer un seul arrêt si la condition n'autorisant pas initialement l'arrêt du moteur vient à disparaître.

En variante de réalisation, on pourra distinguer entre les conditions prédéterminées pour lesquelles l'arrêt du moteur n'est pas autorisé et on pourra autoriser l'arrêt ultérieur du moteur lors de la disparition de la condition n'autorisant pas initialement l'arrêt pour certaines conditions prédéterminées seulement.

Dans la variante de réalisation représentée à la figure 2, on pourra également autoriser un arrêt si la condition n'autorisant pas initialement l'arrêt du moteur vient à disparaître avant un laps de temps ou temporisation T comptée à partir de l'entrée en phase d'arrêt du véhicule. Cette temporisation T calibrée en fonction du moteur et du véhicule concernés est généralement comprise entre deux et dix secondes.

Si, à l'opposé, l'étape 101 révèle que le véhicule ne se trouve dans aucune des conditions de fonctionnement du véhicule s'opposant à l'arrêt du moteur c'est-à-dire que le véhicule se trouve en phase d'autorisation d'arrêt moteur, alors le moteur est arrêté lors de l'étape 102.

Par la suite, lors d'une nouvelle étape de test 103, étape réitérée jusqu'à la fin de la présente phase de demande d'arrêt du moteur elle-même déterminée à l'étape de test 105, le calculateur vérifie l'état du véhicule et détermine si les conditions de fonctionnement du véhicule autorisent toujours le maintien à l'arrêt du moteur.

L'arrêt effectif du moteur n'est, en effet, maintenu que si les conditions de fonctionnement du véhicule le permettent c'est-à-dire si le véhicule ne se trouve pas dans l'une ou l'autres des conditions prédéterminées pour lesquelles l'arrêt du moteur n'est pas autorisé.

Les conditions n'autorisant pas l'arrêt du moteur sont donc une à une vérifiées à l'étape 103 de façon similaire à l'étape 101.

Si une condition de fonctionnement s'opposant à l'arrêt du moteur survient alors celui-ci est redémarré à l'étape 104. Le moteur ne sera alors plus arrêté pendant toute la durée restante de la phase d'arrêt véhicule même si la condition s'opposant à l'arrêt du moteur vient à disparaître. Le processus s'arrête donc là et l'on revient à l'étape de test 100 afin de déterminer la survenue d'une nouvelle phase de demande d'arrêt moteur.

En variante de réalisation, on pourra opérer un autre arrêt si la condition n'autorisant pas le maintien à l'arrêt du moteur vient à disparaître.

En variante de réalisation, on pourra distinguer entre les conditions prédéterminées pour lesquelles l'arrêt du moteur n'est plus autorisé et on pourra autoriser l'arrêt ultérieur du moteur lors de la disparition de la condition n'autorisant pas le maintien à l'arrêt pour certaines conditions prédéterminées seulement.

Bien évidemment la présente invention n'est pas limitée au mode particulier de réalisation décrit ci-dessus et on peut apporter à celui-ci de nombreux changements ou modifications sans sortir de l'object des revendications.

Ainsi le nombre d'arrêts et de redémarrages du moteur dans une phase donnée de demande d'arrêt du moteur peut être ajustée selon la nature de la phase d'arrêt.

## Revendications

1. Procédé de commande de l'arrêt et du démarrage d'un moteur thermique (2) équipant un véhicule du type selon lequel il est nécessaire que le véhicule se trouve en phase de demande d'arrêt moteur et ne se trouve pas dans les conditions de fonctionnement prédéfinies s'opposant à l'arrêt dudit moteur (2) pour que l'arrêt du moteur (2) soit commandé ou qu'il est nécessaire que le véhicule se trouve en phase de demande de démarrage moteur et ne se trouve pas dans les conditions de fonctionnement prédéfinies s'opposant au démarrage dudit moteur (2) pour que le démarrage du moteur soit commandé, **caractérisé en ce que** pour une phase de demande d'arrêt donnée du moteur, il n'est commandé, au plus, qu'un nombre prédéterminé d'arrêts ou de démarrages dudit moteur (2).

2. Procédé de commande de l'arrêt et du démarrage d'un moteur thermique (2) selon la revendication 1, **caractérisé en ce que**, pour une phase de demande d'arrêt donnée du moteur, il n'est commandé, au plus, qu'un seul arrêt du moteur (2).

3. Procédé de commande de l'arrêt et du démarrage d'un moteur thermique (2) selon la revendication 2, **caractérisé en ce que** si, lors de la survenue d'une phase de demande d'arrêt du moteur, ledit véhicule se trouve dans certaines desdites conditions de fonctionnement prédéfinies s'opposant à l'arrêt du moteur, il n'est pas commandé d'arrêt du moteur (2) pendant toute la durée de ladite phase de demande d'arrêt du moteur.

4. Procédé de commande de l'arrêt et du démarrage d'un moteur thermique (2) selon la revendication 2, **caractérisé en ce que** si, lors de la survenue d'une phase de demande d'arrêt du moteur et pendant un laps de temps supérieur à une valeur de seuil (T) suivant le début de ladite phase de demande d'arrêt du moteur, ledit véhicule se trouve dans certaines desdites conditions de fonctionnement prédéfinies s'opposant à l'arrêt du moteur, il n'est pas commandé d'arrêt du moteur (2) pendant toute la durée de ladite phase de demande d'arrêt du moteur.

5. Procédé de commande de l'arrêt et du démarrage d'un moteur thermique (2) selon la revendication 2, **caractérisé en ce que** si, lors de la survenue d'une phase de demande d'arrêt du moteur, ledit véhicule se trouve dans une quelconque desdites conditions de fonctionnement prédéfinies s'opposant à l'arrêt du moteur, il n'est pas commandé d'arrêt du moteur (2) pendant toute la durée de ladite phase de demande d'arrêt du moteur.

6. Procédé de commande de l'arrêt et du démarrage d'un moteur thermique (2) selon la revendication 2, **caractérisé en ce que** si, lors de la survenue d'une phase de demande d'arrêt du moteur et pendant un laps de temps supérieur à une valeur de seuil (T) suivant le début de ladite phase de demande d'arrêt du moteur, ledit véhicule se trouve dans une quelconque desdites conditions de fonctionnement prédéfinies s'opposant à l'arrêt du moteur, il n'est pas commandé d'arrêt du moteur (2) pendant toute la durée de ladite phase de demande d'arrêt du moteur.

7. Procédé de commande de l'arrêt et du démarrage d'un moteur thermique (2) selon l'une quelconque des revendications précédentes, **caractérisé en ce que** si, pendant une phase de demande d'arrêt du moteur et alors que le moteur a été arrêté, ledit véhicule se trouve dans certaines desdites conditions de fonctionnement prédéfinies s'opposant à l'arrêt du moteur, il est alors commandé le démarrage du moteur (2) et il ne sera plus commandé d'arrêt dudit moteur (2) pendant tout le reste de ladite phase de demande d'arrêt du moteur.

8. Procédé de commande de l'arrêt et du démarrage d'un moteur thermique (2) selon l'une quelconque des revendications précédentes, **caractérisé en ce que** si, pendant une phase de demande d'arrêt du moteur et alors que le moteur a été arrêté, ledit véhicule se trouve dans une quelconque desdites conditions de fonctionnement prédéfinies s'opposant à l'arrêt du moteur (2), il est alors commandé le démarrage du moteur et il ne sera plus commandé d'arrêt dudit moteur pendant tout le reste de ladite phase de demande d'arrêt du moteur.

## Claims

1. Method of controlling the stopping and starting of an internal combustion engine (2) equipping a vehicle, of the type in which it is necessary that the vehicle is in an engine stop request phase and not in the predefined operating conditions opposing the stopping of the said engine (2), in order that the engine (2) is stopped, or it is necessary that the vehicle is in an engine start request phase and not in the predefined operating conditions opposing the starting of the said engine (2), in order that the engine is started, **characterized in that**, for a given engine stop request phase, the said engine (2) is stopped or started a predetermined number of times at most.

2. Method of controlling the stopping and starting of an internal combustion engine (2) according to Claim 1, **characterized in that**, for a given engine stop request phase, the engine (2) is stopped only once at most.

3. Method of controlling the stopping and starting of an internal combustion engine (2) according to Claim 2, **characterized in that** if, upon the occurrence of an engine stop request phase, the said vehicle is in certain of the said predefined operating conditions opposing the stopping of the engine, the engine (2) is not stopped during the entire duration of the said engine stop request phase.

4. Method of controlling the stopping and starting of an internal combustion engine (2) according to Claim 2, **characterized in that** if, upon the occurrence of an engine stop request phase and during a time period greater than a threshold value (T) following the start of the said engine stop request phase, the said vehicle is in certain of the said predefined operating conditions opposing the stopping of the engine, the engine (2) is not stopped during the entire duration of the said engine stop request phase.

5. Method of controlling the stopping and starting of an internal combustion engine (2) according to Claim 2, **characterized in that** if, upon the occurrence of an engine stop request phase, the said vehicle is in any one of the said predefined operating conditions opposing the stopping of the engine, the engine (2) is not stopped during the entire duration of the said engine stop request phase.

6. Method of controlling the stopping and starting of an internal combustion engine (2) according to Claim 2, **characterized in that** if, upon the occurrence of an engine stop request phase and during a time period greater than a threshold value (T) following the start of the said engine stop request phase, the said vehicle is in any one of the said predefined operating conditions opposing the stopping of the engine, the engine (2) is not stopped during the entire duration of the said engine stop request phase.

7. Method of controlling the stopping and starting of an internal combustion engine (2) according to any one of the preceding claims, **characterized in that** if, during an engine stop request phase and while the engine has been stopped, the said vehicle is in certain of the said predefined operating conditions opposing the stopping of the engine, the engine (2) is then started and the said engine (2) will no longer be stopped throughout the remainder of the said engine stop request phase.

8. Method of controlling the stopping and starting of an internal combustion engine (2) according to any one of the preceding claims, **characterized in that** if, during an engine stop request phase and while the engine has been stopped, the said vehicle is in any one of the said predefined operating conditions opposing the stopping of the engine (2), the engine is then started and the said engine will no longer be stopped throughout the remainder of the said engine stop request phase.

## Patentansprüche

1. Verfahren zum Steuern des Stoppens und des Startens eines Wärmekraftmotors (2), der ein Fahrzeug ausstattet, des Typs, bei dem es erforderlich ist, dass sich das Fahrzeug in der Phase der Motorstoppanfrage befindet und nicht in den vordefinierten Betriebsbedingungen, die dem Stoppen des Motors (2) entgegen stehen, damit das Stoppen des Motors (2) gesteuert wird, oder dass es erforderlich ist, dass sich das Fahrzeug in der Phase der Motorstartanfrage befindet und nicht in den vordefinierten Betriebsbedingungen, die dem Starten des Motors (2) entgegen stehen, damit das Starten des Motors gesteuert wird, **dadurch gekennzeichnet, dass** für eine gegebene Stoppanfragephase des Motors maximal eine vorbestimmte Anzahl von Stopp- oder Startvorgängen des Motors (2) gesteuert wird.

2. Verfahren zum Steuern des Stoppens und des Startens eines Wärmekraftmotors (2) nach Anspruch 1, **dadurch gekennzeichnet, dass** für eine gegebene Stoppanfragephase des Motors maximal ein einziges Stoppen des Motors (2) gesteuert wird.

3. Verfahren zum Steuern des Stoppens und des Startens eines Wärmekraftmotors (2) nach Anspruch 2, **dadurch gekennzeichnet, dass**, wenn sich das Fahrzeug beim Auftreten einer Stoppanfragephase des Motors in bestimmten der vordefinierten Betriebsbedingungen befindet, die dem Stoppen des Motors entgegen stehen, während der ganzen Dauer der Stoppanfragephase des Motors kein Stoppen des Motors (2) gesteuert wird.

4. Verfahren zum Steuern des Stoppens und des Startens eines Wärmekraftmotors (2) nach Anspruch 2, **dadurch gekennzeichnet, dass**, wenn sich das Fahrzeug beim Auftreten einer Stoppanfragephase des Motors und während einer Zeitspanne, die größer ist als ein Schwellenwert (T), nach dem Beginn der Stoppanfragephase des Motors in bestimmten der vordefinierten Betriebsbedingungen befindet, die dem Stoppen des Motors entgegen stehen, kein Stoppen des Motors (2) während des ganzen Rests der Stoppanfragephase des Motors gesteuert wird.

5. Verfahren zum Steuern des Stoppens und des Startens eines Wärmekraftmotors (2) nach Anspruch 2, **dadurch gekennzeichnet, dass**, wenn sich das Fahrzeug beim Auftreten einer Stoppanfragephase des Motors in einer beliebigen der vordefinierten Betriebsbedingungen befindet, die dem Stoppen des Motors entgegen stehen, während der ganzen Dauer der Stoppanfragephase des Motors kein Stoppen des Motors (2) gesteuert wird.

6. Verfahren zum Steuern des Stoppens und des Startens eines Wärmekraftmotors (2) nach Anspruch 2, **dadurch gekennzeichnet, dass**, wenn sich das Fahrzeug beim Auftreten einer Stoppanfragephase des Motors und während einer Zeitspanne, die größer ist als ein Schwellenwert (T), nach dem Beginn der Stoppanfragephase des Motors, in einer beliebigen der vordefinierten Betriebsbedingungen befindet, die dem Stoppen des Motors entgegen stehen, während der ganzen Dauer der Stoppanfragephase des Motors kein Stoppen des Motors (2) gesteuert wird.

7. Verfahren zum Steuern des Stoppens und des Startens eines Wärmekraftmotors (2) nach einem der vorhergehenden Ansprüche, **dadurch gekennzeichnet, dass**, wenn sich das Fahrzeug während einer Stoppanfragephase des Motors und während der Motor gestoppt wurde, in bestimmten der vordefinierten Betriebsbedingungen befindet, die dem Stoppen des Motors entgegen stehen, das Starten des Motors (2) gesteuert wird und während des ganzen Rests der Stoppanfragephase des Motors kein Stoppen des Motors (2) mehr gesteuert wird.

8. Verfahren zum Steuern des Stoppens und des Startens eines Wärmekraftmotors (2) nach einem der vorhergehenden Ansprüche, **dadurch gekennzeichnet, dass**, wenn sich das Fahrzeug während einer Stoppanfragephase des Motors und während der Motor gestoppt wurde, in einer beliebigen der vordefinierten Betriebsbedingungen befindet, die dem Stoppen des Motors (2) entgegen stehen, während des ganzen Rests der Stoppanfragephase des Motors das Starten des Motors des Motors gesteuert wird und kein Stoppen des Motors mehr gesteuert wird.
